(19) Europäisches Patentamt
European Patent Office
Office européen des brevets

(11) **EP 4 722 279 A1**

(12) **EUROPEAN PATENT APPLICATION**
published in accordance with Art. 153(4) EPC

(43) Date of publication:
08.04.2026 Bulletin 2026/15

(21) Application number: 24815839.6

(22) Date of filing: 28.05.2024

(51) International Patent Classification (IPC):
*C08J 5/18* (2006.01)   *B29C 55/02* (2006.01)

(52) Cooperative Patent Classification (CPC):
B29C 55/02; C08J 5/18; Y02W 30/62

(86) International application number:
PCT/KR2024/007248

(87) International publication number:
WO 2024/248463 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 KR 20230070188

(71) Applicant: SK Chemicals Co., Ltd.
Seongnam-si, Gyeonggi-do 13494 (KR)

(72) Inventors:
• HWANG, Da-Young
Seongnam-si, Gyeonggi-do 13494 (KR)
• KIM, Sangwoo
Seongnam-si, Gyeonggi-do 13494 (KR)
• EOM, Jiyeon
Seongnam-si, Gyeonggi-do 13494 (KR)
• LEE, Boo-Youn
Seongnam-si, Gyeonggi-do 13494 (KR)

(74) Representative: Dehns
10 Old Bailey
London EC4M 7NG (GB)

(54) **ORIENTED POLYESTER FILM AND MANUFACTURING METHOD THEREFOR**

(57) The present invention relates to an oriented polyester film and a manufacturing method therefor. The oriented polyester film comprises a polyester resin in which a diol component and a dicarboxylic acid component are polymerized. when analyzed by differential scanning calorimetry (DSC) after first heat treatment and a second heat treatment, the oriented polyester film exhibits a first melting temperature ($Tm_1$) and a second melting temperature ($Tm_2$), and shows not less than 0.1 in the ratio ($H_2/H_1$) of a second heat of fusion ($H_2$) at the second melting temperature ($Tm_2$) to a first heat of fusion ($H_1$) at the first melting temperature ($Tm_1$). The oriented polyester film according to the present invention can be usefully utilized as a heat shrinkable film applied as a label and/or packaging of a plastic container, and in particular, has very excellent crystallinity, thereby increasing recycling process efficiency of a waste plastic container.

Fig. 1

EP 4 722 279 A1

## Description

### Technical Field

The present invention relates to an oriented polyester film having heat shrinkability and very excellent crystallinity to increase the efficiency of a recycling process and to a process for preparing the oriented polyester film.

### Background Art

Polyester, among polymers, is used as a material in various fields by virtue of its excellent mechanical strength, heat resistance, transparency, and gas barrier properties. In particular, heat-shrinkable films prepared using a polyester resin have high heat resistance and appropriate heat shrinkage rate; thus, they are suitable for packaging and/or labels for plastic containers such as PET bottles.

Meanwhile, the use of plastic containers makes real life convenient, whereas environmental problems are becoming very serious due to indiscriminate disposal or excessive use thereof. Accordingly, various methods for recycling waste plastic containers after use are being prepared.

The process of recycling waste plastic containers may be divided into a physical recycling process through washing and crushing and a chemical recycling process through a depolymerization process. However, in order to go through such a recycling process, a pretreatment operation of separating waste plastics by plastic type is required, which reduces the efficiency of the recycling process. For example, in order to recycle a PET bottle to which a polyester film is attached as a label, an operation of separating (removing) the polyester film from the PET bottle must be accompanied. This is attributed to the difference in crystallinity between the polyester resin contained in a polyester film and the PET contained in a PET bottle, which makes the recycling process unworkable when the PET bottle with the polyester film attached is subjected to the recycling process.

Accordingly, in order to increase the efficiency of the recycling process, it is necessary to develop a technology capable of omitting the pretreatment operation of separating (removing) a polyester film from plastic containers such as PET bottles.

[Prior Art Document]

[Patent Document]

(Patent Document 1) Korean Laid-open Patent Publication No. 2009-0062882

### Disclosure of Invention

### Technical Problem

In order to solve the above-mentioned problems in the prior art, the present inventors have conducted various studies. As a result, it has been discovered that an oriented polyester film capable of undergoing a recycling process without being separated (removed) from a waste plastic container is obtained by maximizing the crystallinity of the oriented polyester film prepared using a polyester resin.

Accordingly, an object of the present invention is to provide an oriented polyester film with excellent crystallinity and a process for preparing the same.

### Solution to Problem

In order to solve the above problems, the present invention provides an oriented polyester film that comprises a polyester resin in which a diol component and a dicarboxylic acid component are polymerized, wherein when the film is subjected to a first heat treatment and a second heat treatment and is then analyzed by differential scanning calorimetry (DSC), a first melting temperature ($Tm_1$) and a second melting temperature ($Tm_2$) appear, and the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

In addition, the present invention provides an oriented polyester film that comprises a polyester resin in which a diol component and a dicarboxylic acid component are polymerized, wherein when a sample of the oriented polyester film obtained by subjecting the oriented polyester film to a first heat treatment at 70°C, a preliminary heat treatment at 160°C, and then cutting it into 1 cm × 1 cm is mixed with a sample of polyethylene terephthalate (PET) obtained by passing a polyethylene terephthalate (PET) container through a 12.5-mm mesh sieve at a weight ratio of 3:97, which is heat-treated at 195°C for 90 minutes, and the heat-treated mixed sample is passed through the sieve to evaluate the crystallinity of the polyester oriented film, the crystalline fraction represented by the following Equation 2 is 30% or more.

$$[\text{Equation 2}]$$

$$\text{Crystalline fraction } (\%) = (F_T/F_m) \times 100$$

In Equation 2, $F_T$ is the ratio (($S_s/M_T$) $\times$ 100, %) of the weight ($S_s$) of the sample that has passed through the 12.5-mm mesh sieve among the heat-treated mixed sample to the total weight ($M_T$) of the heat-treated mixed sample, and $F_m$ is the ratio (($C_s/M_T$) $\times$ 100, %) of the weight ($C_s$) of the agglomerated sample that remains on the 12.5-mm mesh sieve among the heat-treated mixed sample to the total weight ($M_T$) of the heat-treated mixed sample.

In addition, the present invention provides a process for preparing an oriented polyester film that comprises polymerizing a diol component and a dicarboxylic acid component to prepare a polyester resin; preparing an oriented polyester sheet from the polyester resin; and heat-setting the oriented sheet, wherein when the film is subjected to a first heat treatment and a second heat treatment and is then analyzed by differential scanning calorimetry (DSC), a first melting temperature ($Tm_1$) and a second melting temperature ($Tm_2$) appear, and the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

**Advantageous Effects of Invention**

The oriented polyester film according to the present invention has a plurality of melting temperatures ($T_m$) and satisfies a specific range of heat of fusion ratio when heat-treated two or more times under specific conditions, thereby showing excellent heat shrinkability, along with maximized crystallinity.

Therefore, the oriented polyester film according to the present invention can be advantageously used as a heat-shrinkable film for packaging and/or labels for plastic containers (e.g., PET bottles).

Further, the oriented polyester film according to the present invention has a high crystallinity. In a recycling process of waste plastic containers after use, the recycling process of waste plastic containers without separating the oriented polyester film may be possible (for example, it is possible that waste plastic containers as the oriented polyester film is attached are put into the recycling process). As a result, the present invention can increase the efficiency of a recycling process as compared with the prior art.

**Brief Description of Drawing**

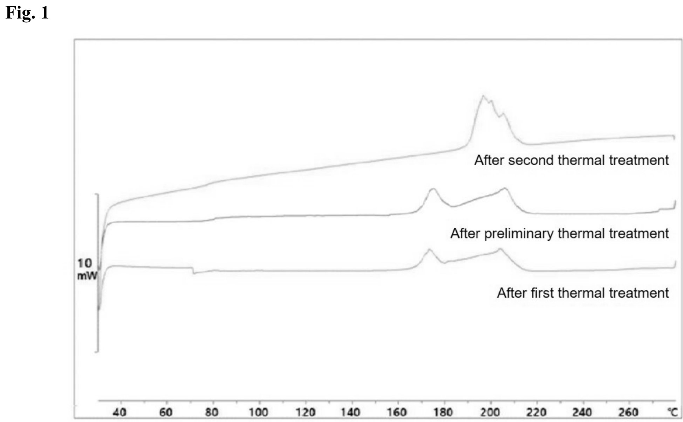

Fig. 1 is the result (graph) of a DSC analysis of the oriented polyester film prepared in Example 6 of the present invention.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

In general, the melting temperature ($T_m$) of a polymer resin is defined as the limit of the crystallization temperature ($T_c$), which is the temperature at which the crystalline part of the polymer resin begins to melt. A polymer resin having a plurality of melting temperatures ($T_m$) requires a large amount of heat to melt the crystalline part, which may be interpreted to mean that the crystallinity of the polymer resin is maximized.

Based on the above, the oriented polyester film of the present invention comprising a polyester resin, which is a polymer resin, has a plurality of melting temperatures ($T_m$) through a first heat treatment and second heat treatment under specific conditions. The ratio of heat of fusion at the plurality of melting temperatures satisfies a specific range, showing high crystallinity.

In particular, in the oriented polyester film according to an embodiment, the oriented polyester film may be shrunk through a first heat treatment, and the crystallinity of the oriented polyester film may be enhanced through a second heat treatment.

In addition, the crystallinity of the oriented polyester film can be optimized by variously controlling the second heat treatment conditions. By virtue of such optimized crystallinity, it can be advantageously used as a heat-shrinkable film for packaging and/or labels for plastic containers (e.g., PET bottles). Further, there is technical significance in that, in a recycling process of waste plastic containers after use, the recycling process of waste plastic containers without separating the oriented polyester film (polyester film) may be possible (for example, it is possible that waste plastic containers as the oriented polyester film is attached are put into the recycling process), thereby significantly enhancing the recycling process efficiency.

Hereinafter, this will be described in detail.

**Stretched polyester film**

The oriented polyester film according to an embodiment comprises a polyester resin in which a diol component and a dicarboxylic acid component are polymerized, wherein when the film is subjected to a first heat treatment and a second heat treatment and is then analyzed by differential scanning calorimetry (DSC), a first melting temperature ($Tm_1$) and a second melting temperature ($Tm_2$) appear, and the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

Specifically, the oriented polyester film is an oriented film comprising a polyester resin. It is possible to achieve excellent heat shrinkage by a heat treatment at a first heat treatment temperature. As the oriented polyester film shrunk by heating as above is subjected to heat treatment at a second heat treatment temperature, it is possible to optimally enhance the crystallinity of the oriented polyester film shrunk by heating, thereby providing a heat-shrinkable film with enhanced crystallinity while maintaining excellent heat shrinkability.

The crystallinity of the oriented polyester film can be an indicator of recyclability and recycling process efficiency. That is, as the crystallinity of the oriented polyester film increases, recyclability increases, and recycling process efficiency can be enhanced.

The crystallinity of the oriented polyester film according to an embodiment can be optimally enhanced through two or more heat treatment processes. As a result, since fusion with a waste plastic container is reduced in the recycling process of the oriented polyester film as it is attached to the waste plastic container, the recycling process of the waste plastic container can be carried out without the step of separating (removing) the oriented polyester film from the waste plastic container, thereby increasing the recycling process efficiency.

Meanwhile, the oriented polyester film according to the present invention may be a polyester film prepared by heat-treating an oriented film prepared from a polyester resin twice or more.

Specifically, the oriented polyester film according to the present invention may be a polyester film prepared by heat-treating an oriented film prepared from a polyester resin at a first heat treatment temperature and then heat-treating it again at a second heat treatment temperature. In addition, it may be a polyester film prepared by heat treatment once or twice or more when heat treatment is carried out at the second heat treatment temperature.

For example, the oriented polyester film may be a polyester film prepared by heat treatment twice or more, specifically twice or three times. Specifically, the oriented polyester film may be a polyester film prepared by, for example, a first heat treatment and a second heat treatment, or a first heat treatment, a preliminary heat treatment of a second heat treatment, and a second heat treatment.

In the present specification, the oriented polyester film may comprise a film obtained by melting the polyester resin into a sheet and then stretching the sheet.

Specifically, the oriented polyester film may be an oriented film prepared through a melting and casting step of the polyester resin, a stretching step, and/or a heat-setting step. The specific processing method of the polyester oriented film is as described below.

According to an embodiment, the first heat treatment temperature may be 60 to 105°C, specifically, 62 to 104°C, 62 to 103°C, 65 to 102°C, 68 to 100°C, 70 to 100°C, 70 to 98°C, 70 to 97°C, or 70 to 96°C.

The first heat treatment is a shrinkage process of the oriented polyester film. As the first heat treatment temperature satisfies the above range, the oriented polyester film can achieve excellent heat shrinkability at the desired level.

In addition, the second heat treatment temperature may be 140 to 220°C, specifically, 141 to 219°C, 142 to 218°C, 143 to 217°C, 144 to 216°C, 145 to 215°C, 145 to 214°C, 146 to 213°C, or 150 to 210°C.

The second heat treatment is a crystallization process of the polyester film shrunk by the first heat treatment. As the second heat treatment temperature satisfies the above range, the oriented polyester film can achieve excellent crystallinity at the desired level.

That is, as the first heat treatment and the second heat treatment of the oriented polyester film are carried out, excellent heat shrinkability and high crystallinity can be achieved at the same time.

In particular, as the first and second heat treatment temperatures each satisfy the above ranges, the oriented polyester film according to the present invention may have high crystallinity to a required level and excellent heat shrinkability.

In addition, the second heat treatment conditions may be varied to adjust crystallinity.

For example, the second heat treatment may be carried out by a preliminary heat treatment (preliminary heat treatment of the second heat treatment) of the oriented polyester film that has been subjected to the first heat treatment, followed by the second heat treatment.

Specifically, the second heat treatment may comprise a preliminary heat treatment of the oriented polyester film that has been subjected to the first heat treatment and a second heat treatment of the oriented polyester film that has been subjected to the preliminary heat treatment.

The preliminary heat treatment may be carried out in the same or similar temperature range as that of the second heat treatment. For example, the preliminary heat treatment may be carried out at a temperature of 140 to 220°C, specifically, 141 to 219°C, 142 to 218°C, 143 to 217°C, 144 to 216°C, 145 to 215°C, 145 to 214°C, 146 to 213°C, or 150 to 210°C, for 1 minute to 30 minutes, 1 minute to 20 minutes, 5 minutes to 30 minutes, 5 minutes to 25 minutes, 5 minutes to 20 minutes, 5 minutes to 15 minutes, 6 minutes to 25 minutes, 6 minutes to 20 minutes, 6 minutes to 15 minutes, or 6 minutes to 13 minutes.

When a preliminary heat treatment is carried out in the above range in the second heat treatment, the oriented polyester film shrunk by the first heat treatment is crystallized through the preliminary heat treatment, and the crystallinity of the oriented polyester film can be maximized to an optimal range through the second heat treatment, whereby it is possible to further enhance recycling process efficiency.

Meanwhile, the differential scanning calorimeter (DSC) for analyzing the oriented polyester film after the first heat treatment and the second heat treatment may be specifically a modulated differential scanning calorimeter (modulated DSC or MDSC), more specifically a temperature-modulated differential scanning calorimeter (TMDSC). For analysis by differential scanning calorimetry (DSC), the heating rate condition of 10°C/minute from room temperature to 280°C may be adopted.

According to an embodiment, the first melting temperature ($T_{m1}$) and the second melting temperature ($T_{m2}$) that appear upon the first heat treatment and the second heat treatment are not particularly limited, but they may each be 150 to 230°C. Here, the first melting temperature ($T_{m1}$) and the second melting temperature ($T_{m2}$) may be different from each other. Specifically, the first melting temperature ($T_{m1}$) may be lower than the second melting temperature ($T_{m2}$).

That is, the first melting temperature ($T_{m1}$), after the first heat treatment, may be 150 to 230°C, specifically, 152 to 230°C, 154 to 220°C, 156 to 220°C, 158 to 215°C, 160 to 215°C, 162 to 215°C, or 162 to 210°C.

In addition, after the first heat treatment, one or more first melting temperatures ($T_{m1}$) may appear.

That is, after the first heat treatment, one or a plurality of first melting temperatures ($T_{m1}$) may appear, and the plurality of first melting temperatures ($T_{m1}$) may show different melting temperatures within the range.

In addition, the second melting temperature ($T_{m2}$) may be 150 to 230°C, specifically, 155 to 230°C, 170 to 230°C, 175 to 229°C, 180 to 229°C, 185 to 228°C, 190 to 228°C, or 195 to 228°C.

Specifically, after the second heat treatment, the second melting temperature ($T_{m2}$) is 150°C to 230°C, and it may have crystallinity. In addition, after the second heat treatment, it may have a desired melting temperature ($T_{m2}$) and enthalpy at that temperature.

Here, the first melting temperature ($T_{m1}$) and the second melting temperature ($T_{m2}$) may be different from each other.

In addition, after the second heat treatment, one or more second melting temperatures ($T_{m2}$) may appear.

That is, after the second heat treatment, one or a plurality of second melting temperatures ($T_{m2}$) may appear, and the plurality of second melting temperatures ($T_{m2}$) may show different melting temperatures within the range.

As the first and second melting temperatures ($T_{m1}$ and $T_{m2}$) are each within the above ranges, the oriented polyester film according to the present invention may have high crystallinity to a required level, along with enhanced heat shrinkability, heat resistance, and durability.

In addition, when the oriented polyester film after the first heat treatment and after the preliminary heat treatment before the second heat treatment is analyzed by differential scanning calorimetry (DSC), a second-p melting temperature ($T_{m2-p}$) appears. The second-p melting temperature ($T_{m2-p}$) may be 150 to 230°C, specifically, 155 to 230°C, 156 to 230°C, 157 to 229°C, 160 to 229°C, 160 to 228°C, or 160 to 225°C.

In addition, when the oriented polyester film after the first heat treatment and after the preliminary heat treatment before the second heat treatment is analyzed by differential scanning calorimetry (DSC), one or more of the second-p melting temperature ($T_{m2-p}$) may appear.

That is, after the preliminary heat treatment of the oriented polyester film subjected to the first heat treatment, one or a plurality of second-p melting temperatures ($T_{m2-p}$) may appear, and the plurality of second-p melting temperatures ($T_{m2-p}$) may show different melting temperatures within the range.

As the second-p melting temperature ($T_{m2-p}$) is within the above range, the oriented polyester film may have maximized crystallinity, along with further enhanced heat shrinkability, heat resistance, and durability.

Meanwhile, according to an embodiment, it may have heat of fusion (delta H) in a specific range at the respective first melting temperature ($T_{m1}$) and second melting temperature ($T_{m2}$). The heat of fusion refers to the amount of heat required to melt a substance. By adjusting the heat of fusion and the ratio of the heat of fusion, crystallinity can be adjusted to a desired range.

Specifically, the heat of fusion ($H_1$) at the first melting temperature ($T_{m1}$) after the first heat treatment may be 1.0 J/g or more, 1.5 J/g or more, or 2.0 J/g or more, and 40.0 J/g or less, 35.0 J/g or less, 30.0 J/g or less, 28.0 J/g or less, or 27.0 J/g or less. More specifically, the heat of fusion ($H_1$) at the first melting temperature ($T_{m1}$) after the first heat treatment may be, for example, 1.0 J/g to 40.0 J/g, 1.0 J/g to 30.0 J/g, 1.0 J/g to 28.0 J/g, 2.0 J/g to 40.0 J/g, 2.0 J/g to 30.0 J/g, 2.0 J/g to 28.0 J/g, 3.0 J/g to 40.0 J/g, 3.0 J/g to 30.0 J/g, 3.0 J/g to 28.0 J/g, 4.0 J/g to 40.0 J/g, 4.0 J/g to 30.0 J/g, 4.0 J/g to 28.0 J/g, 4.8 J/g to 40.0 J/g, 4.8 J/g to 30.0 J/g, or 4.8 J/g to 28.0 J/g.

When the heat of fusion ($H_1$) at the first melting temperature ($T_{m1}$) after the first heat treatment satisfies the above range, it may be advantageous for satisfying the desired heat shrinkage rate and crystallinity. In particular, the oriented polyester film according to the present invention is prepared from an oriented film comprising a polyester resin. In such an event, the oriented film exhibits excellent heat shrinkability through the first heat treatment, and the oriented polyester film prepared therefrom has excellent heat shrinkability.

In addition, one or more first melting temperatures ($T_{m1}$) appear after the first heat treatment, and the total sum of heats of fusion ($H_{1T}$) may be 1.0 J/g or more, 1.5 J/g or more, or 2.0 J/g or more, and 40.0 J/g or less, 35.0 J/g or less, 30.0 J/g or less, 25.0 J/g or less, or 20.0 J/g or less. More specifically, the total sum of heats of fusion ($H_{1T}$) after the first heat treatment may be, for example, 1.0 J/g to 40.0 J/g, 1.0 J/g to 30.0 J/g, 1.0 J/g to 28.0 J/g, 2.0 J/g to 40.0 J/g, 2.0 J/g to 30.0 J/g, 2.0 J/g to 28.0 J/g, 3.0 J/g to 40.0 J/g, 3.0 J/g to 30.0 J/g, 3.0 J/g to 28.0 J/g, 4.0 J/g to 40.0 J/g, 4.0 J/g to 30.0 J/g, 4.0 J/g to 28.0 J/g, 4.8 J/g to 40.0 J/g, 4.8 J/g to 30.0 J/g, or 4.8 J/g to 28.0 J/g.

When the total sum of heats of fusion ($H_{1T}$) satisfies the above range, it may be more advantageous for achieving the desired effect.

In addition, the second heat of fusion ($H_2$) at the second melting temperature ($T_{m2}$) after the second heat treatment may be greater than 0.0 J/g, 0.1 J/g or more, 0.5 J/g or more, 1.0 J/g or more, or 1.5 J/g or more, and less than 50.0 J/g or less, 45.0 J/g or less, 40.0 J/g or less, 35.0 J/g or less, or 30.0 J/g or less. More specifically, the second heat of fusion ($H_2$) at the second melting temperature ($T_{m2}$) after the second heat treatment may be, for example, greater than 0.0 J/g to less than 50.0 J/g, 0.1 J/g to 49.0 J/g, 0.1 J/g to 45.0 J/g, 0.1 J/g to 40.0 J/g, 0.5 J/g to 49.0 J/g, 0.5 J/g to 45.0 J/g, 0.5 J/g to 40.0 J/g, 0.5 J/g to 33.0 J/g, 0.5 J/g to 30.0 J/g, 1.0 J/g to 49.0 J/g, 1.0 J/g to 45.0 J/g, 1.0 J/g to 40.0 J/g, 1.0 J/g to 33.0 J/g, 1.0 J/g to 30.0 J/g, 1.5 J/g to 49.0 J/g, 1.5 J/g to 45.0 J/g, 1.5 J/g to 40.0 J/g, 1.5 J/g to 33.0 J/g, or 1.5 J/g to 30.0 J/g.

When the second heat of fusion ($H_2$) at the second melting temperature ($T_{m2}$) after the second heat treatment satisfies the above range, it may be further advantageous for satisfying the desired heat shrinkage rate and crystallinity.

After the second heat treatment, one or more second melting temperatures ($T_{m2}$) appear, and the total sum of heats of fusion ($H_{2T}$) may be 1.0 J/g or more or 1.5 J/g or more, and less than 50.0 J/g or less, 49.0 J/g or less, 45.0 J/g or less, 40.0 J/g or less, 35.0 J/g or less, or 30.0 J/g or less. More specifically, the total sum of heats of fusion ($H_{2T}$) may be, for example, 1.0 J/g to 49.0 J/g, 1.0 J/g to 45.0 J/g, 1.0 J/g to 40.0 J/g, 1.0 J/g to 33.0 J/g, 1.0 J/g to 30.0 J/g, 1.5 J/g to 49.0 J/g, 1.5 J/g to 45.0 J/g, 1.5 J/g to 40.0 J/g, 1.5 J/g to 33.0 J/g, or 1.5 J/g to 30.0 J/g.

When the total sum of heats of fusion ($H_{2T}$) satisfies the above range, it may be more advantageous for achieving the desired effect.

In addition, the oriented polyester film after the first heat treatment and after the preliminary heat treatment before the second heat treatment may have a second-p heat of fusion ($H_{2-p}$) at the second-p melting temperature ($T_{m2-p}$) of 1.0 J/g or more, 1.5 J/g or more, or 2.0 J/g or more, and 40.0 J/g or less, 35.0 J/g or less, or 33.0 J/g or less. More specifically, the second-p heat of fusion ($H_{2-p}$) at the second-p melting temperature ($T_{m2-p}$) may be, for example, 1.0 J/g to 40.0 J/g, 1.0 J/g to 38.0 J/g, 1.0 J/g to 35.0 J/g, 2.0 J/g to 40.0 J/g, 2.0 J/g to 38.0 J/g, 2.0 J/g to 35.0 J/g, 3.0 J/g to 40.0 J/g, 3.0 J/g to 38.0 J/g, 3.0 J/g to 35.0 J/g, 4.0 J/g to 40.0 J/g, 4.0 J/g to 38.0 J/g, 4.0 J/g to 35.0 J/g, 4.7 J/g to 40.0 J/g, 4.7 J/g to 38.0 J/g, or 4.7 J/g to 35.0 J/g.

When the oriented polyester film after the first heat treatment and the preliminary heat treatment has a second-p heat of fusion ($H_{2-p}$) at the second-p melting temperature ($T_{m2-p}$) satisfying the above range, the crystallinity of the film can be maximized, thereby further enhancing the recycling process efficiency.

In addition, the crystallinity of the oriented polyester film may vary depending on the ratio ($H_2/H_1$) of the second heat of fusion ($H_2$) at the second melting temperature ($T_{m2}$) to the first heat of fusion ($H_1$) at the first melting temperature ($T_{m1}$).

Specifically, the ratio ($H_2/H_1$) of the second heat of fusion ($H_2$) at the second melting temperature ($T_{m2}$) to the first heat of fusion ($H_1$) at the first melting temperature ($T_{m1}$) may be 0.1 or more, for example, 0.1 to 10.0, 0.2 to 9.5, 0.3 to 9.0, 0.3 to 8.5, 0.3 to 8.0, 0.3 to 7.0, 0.3 to 6.0, 0.3 to 5.0, 0.3 to 4.0, 0.3 to 3.8, 0.3 to 3.5, 0.3 to 3.0, 0.3 to 2.9, 0.3 to 2.5, 1.0 to 3.5, 1.0 to 3.4, or 1.0 to 3.0.

When the ratio ($H_2/H_1$) of the second heat of fusion ($H_2$) at the second melting temperature ($T_{m2}$) to the first heat of fusion ($H_1$) at the first melting temperature ($T_{m1}$) satisfies the above range, it is possible to enhance crystallinity while satisfying excellent heat shrinkability at the same time.

According to an embodiment, the sum of heats of fusion of the oriented polyester film after the first heat treatment, preliminary heat treatment, and second heat treatment may increase. In particular, after the second heat treatment, a plurality of melting temperatures increased as compared with before the heat treatment appear. As a result, it is noted that crystallization initiates due to the preliminary heat treatment, and crystallinity can be further enhanced after the second heat treatment.

In addition, the ratio ($H_{1T}/H_{2T}$) of the total sum of heats of fusion ($H_{1T}$) after the first heat treatment to the total sum of heats of fusion ($H_{2T}$) after the second heat treatment may be 0.1 or more, for example, 0.1 to 10.0, 0.1 to 9.5, 0.1 to 9.0, 0.2 to 8.5, 0.2 to 8.0, 0.3 to 7.0, 0.3 to 6.0, 0.3 to 5.0, 0.3 to 4.0, 0.3 to 3.8, 0.3 to 3.5, or 0.3 to 3.0.

In addition, the ratio ($H_2/H_{2-p}$) of the second heat of fusion ($H_2$) at the second melting temperature ($T_{m2}$) to the second-p heat of fusion ($H_{2-p}$) at the second-p melting temperature ($T_{m2-p}$) may be 0.1 or more, for example, 0.1 to 10.0, 0.2 to 9.5, 0.3 to 9.0, 0.3 to 8.5, 0.3 to 8.0, 0.3 to 7.0, 0.3 to 6.0, 0.3 to 5.0, 0.3 to 4.0, 0.3 to 3.8, 0.3 to 3.5, 0.3 to 3.3, 0.3 to 3.2, 0.35 to 3.0, 0.35 to 2.8, or 0.35 to 2.5.

When the ratio ($H_2/H_{2-p}$) of the second heat of fusion ($H_2$) at the second melting temperature ($T_{m2}$) to the second-p heat of fusion ($H_{2-p}$) at the second-p melting temperature ($T_{m2-p}$) satisfies the above range, it is possible to maximize crystallinity while satisfying excellent heat shrinkability at the same time.

Meanwhile, the oriented polyester film may have a heat shrinkage rate of 40% or more as represented by the following Equation 1-1:

$$[\text{Equation 1-1}]$$

$$\text{Heat shrinkage rate (TS}_{80}, \%) = \frac{L_{25} - L_{80}}{L_{25}} \times 100$$

In Equation 1-1, $L_{25}$ is the initial length of the oriented polyester film sample in the transverse direction (TD) at 25°C, and $L_{80}$ is the length of the oriented polyester film sample in the transverse direction (TD) after immersion in hot water at 80°C for 10 seconds.

Specifically, the oriented polyester film may have a heat shrinkage rate, represented by the above Equation 1-1, in the main shrinkage direction of 40% or more, more specifically, 42% or more, 44% or more, 46% or more, 48% or more, 50% or more, 52% or more, 55% or more, or 60% or more. For example, the heat shrinkage rate at 80°C in the main shrinkage direction may be 40 to 70%, 41 to 65%, 42 to 60%, 43 to 60%, 44 to 58%, or 45 to 56%.

In addition, the oriented polyester film may have a heat shrinkage rate of 50% or more as represented by the following Equation 1-2:

$$[\text{Equation 1-2}]$$

$$\text{Heat shrinkage rate (TS}_{90}, \%) = \frac{L_{25} - L_{90}}{L_{25}} \times 100$$

In Equation 1-2, $L_{25}$ is the initial length of the oriented polyester film sample in the transverse direction (TD) at 25°C, and $L_{90}$ is the length of the oriented polyester film sample in the transverse direction (TD) after immersion in hot water at 90°C for 10 seconds.

Specifically, the oriented polyester film may have a heat shrinkage rate, represented by the above Equation 1-2, in the main shrinkage direction of 50% or more, more specifically, 51% or more, 52% or more, 54% or more, 56% or more, 60% or more, 63% or more, or 65% or more. For example, the heat shrinkage rate at 90°C in the main shrinkage direction may be 50 to 80%, 51 to 80%, 52 to 80%, 53 to 79%, 54 to 79%, or 55 to 78%.

Meanwhile, when a polyester label comprising the oriented polyester film is applied to a plastic container, specifically a polyethylene terephthalate (PET) container, the crystalline fraction may be 30% or more.

According to an embodiment, there is provided an oriented polyester film, which comprises a polyester resin in which a diol component and a dicarboxylic acid component are polymerized, wherein when a sample of the oriented polyester film obtained by subjecting the oriented polyester film to a first heat treatment at 70°C, a preliminary heat treatment at 160°C, and then cutting it into 1 cm × 1 cm is mixed with a sample of polyethylene terephthalate (PET) obtained by passing a polyethylene terephthalate (PET) container through a 12.5-mm mesh sieve at a weight ratio of 3:97, which is heat-treated at 195°C for 90 minutes, and the heat-treated mixed sample is passed through the sieve to evaluate the crystallinity of the polyester oriented film, the crystalline fraction represented by the following Equation 2 is 30% or more.

[Equation 2]

$$\text{Crystalline fraction (\%)} = (F_T/F_m) \times 100$$

In Equation 2, $F_T$ is the ratio ($(S_s/M_T) \times 100$, %) of the weight ($S_s$) of the sample that has passed through the 12.5-mm mesh sieve among the heat-treated mixed sample to the total weight ($M_T$) of the heat-treated mixed sample, and $F_m$ is the ratio (($C_s/M_T) \times 100$, %) of the weight ($C_s$) of the agglomerated sample that remains on the 12.5-mm mesh sieve among the heat-treated mixed sample to the total weight ($M_T$) of the heat-treated mixed sample.

In addition, the agglomerated sample that remains on the 12.5-mm mesh sieve among the heat-treated mixed sample may be defined as an oriented polyester film sample (agglomerated sample) that has been fused with the PET sample after heat treatment.

The sample that has passed through the 12.5-mm mesh sieve among the heat-treated mixed sample may be defined as an oriented polyester film sample that has been separated from a PET sample after heat treatment.

For example, the crystalline fraction represented by the above Equation 2 may be 40% or more, 45% or more, 47% or more, 50% or more, 52% or more, 60% or more, 65% or more, 67% or more, 70% or more, 80% or more, 90% or more, 95% or more, or 100%.

The oriented polyester film sample may be cut after the first heat treatment and the preliminary heat treatment. That is, the oriented polyester film sample may be cut after the preliminary heat treatment and before the second heat treatment.

The crystalline fraction represented by the above Equation 2 can be an indicator for evaluating recyclability and recycling process efficiency.

Specifically, when the crystalline fraction satisfies the above range or more, recyclability and recycling process efficiency can be excellent.

Specifically, since the oriented polyester film according to an embodiment has excellent heat shrinkability and high crystallinity, it can be advantageously used as a heat-shrinkable film for packaging and/or labels for plastic containers. In particular, the oriented polyester film according to the present invention has been subjected to the first heat treatment and the second heat treatment (or second heat treatment after the preliminary heat treatment) to have a crystallinity similar or equivalent to that of a plastic container (e.g., PET bottles) having high crystallinity (specifically, it has a crystallinity similar or equivalent to that of polyethylene terephthalate (PET) as a component of PET bottles). Since fusion with the plastic container does not take place in the recycling process of a waste plastic container after use, the recycling process of the waste plastic container can be carried out without the step of separating (removing) the oriented polyester film from the waste plastic container. Therefore, the present invention can increase the efficiency of the recycling process of waste plastic containers as compared with the prior art.

Meanwhile, the polyester resin contained in the oriented polyester film according to the present invention may be a polyester resin in which a diol component and a dicarboxylic acid component are polymerized.

According to the present invention, the diol component may be a commonly known diol component. Specifically, the diol component may comprise at least one selected from the group consisting of bis(2-hydroxyethyl) terephthalate, isosorbide, neopentyl glycol, ethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate (CHDM derivative), 4-(4-(hydroxymethyl)cyclohexylmethoxymethyl)cyclohexylmethanol (CHDM derivative), recycled cyclohexanedimethanol, recycled ethylene glycol, recycled bis(2-hydroxyethyl) terephthalate, and recycled diethylene glycol. Preferably, when the crystallinity, heat shrinkability, and economical efficiency of the oriented polyester film are taken into consideration, the diol component may comprise two or more (specifically, 3 or more, 4 or more, or 5 or more) selected from the group consisting of bis(2-hydroxyethyl) terephthalate, isosorbide, ethylene glycol, cyclohexanedimethanol, neopentyl glycol, diethylene glycol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, and recycled bis(2-hydroxyethyl) terephthalate.

For example, the diol component may comprise ethylene glycol and at least one (specifically, 2 or more, 3 or more, or 4 or more) selected from the group consisting of bis(2-hydroxyethyl) terephthalate, isosorbide, cyclohexanedimethanol, neopentyl glycol, diethylene glycol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, and recycled bis(2-hydroxyethyl) terephthalate as a comonomer.

If the diol component comprises ethylene glycol and the comonomer, the amount of these components is not particularly limited, but the amount of ethylene glycol may be 10 to less than 100% by weight, 15 to 90% by weight, 20 to 85% by weight, 30 to 85% by weight, or 50 to 85% by weight, and the amount of the comonomer may be greater than 0 to 90% by weight, greater than 0 to 85% by weight, 1 to 90% by weight, 1 to 50% by weight, 2 to 50% by weight, 10 to 85% by weight, 15 to 80% by weight, 15 to 70% by weight, or 15 to 50% by weight, based on the total weight of the diol component. In particular, when diethylene glycol is used as the comonomer, the amount of diethylene glycol may be 0 to 50% by weight, 1 to 50% by weight, 2 to 50% by weight, 3 to 45% by weight, 4 to 40% by weight, or 5 to 35% by weight, based on the total weight of the diol component. Therefore, the polyester resin according to the present invention may comprise a structural unit derived from diethylene glycol in an amount of 0 to 50% by weight, 1 to 50% by weight, 2 to 50% by weight, 3 to 45% by weight, 4 to 40% by weight, or 5 to 35% by weight, based on the total weight of the polyester resin.

According to the present invention, the dicarboxylic acid component may be a commonly known dicarboxylic acid component. Specifically, the dicarboxylic acid component may comprise at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, azelaic acid, recycled isophthalic acid, recycled terephthalic acid, recycled dimethyl isophthalate, and recycled dimethyl phthalate. Preferably, when the crystallinity and heat shrinkability of the oriented polyester film are taken into consideration, the dicarboxylic acid component may comprise at least one selected from the group consisting of isophthalic acid, terephthalic acid, dimethyl phthalate, and dimethyl isophthalate.

According to the present invention, the polyester resin may have an intrinsic viscosity (IV) of 0.5 to 1.2 dl/g at 35°C, specifically, 0.52 to 1.15 dl/g, 0.55 to 1.13 dl/g, 0.58 to 1.1 dl/g. g, 0.6 to 0.9 dl/g, 0.62 to 0.88 dl/g, 0.65 to 0.85 dl/g, 0.68 to 0.83 dl/g, or 0.7 to 0.8 dl/g. As the intrinsic viscosity is within the above range, the processability of the polyester resin may be secured.

**Process for preparing an oriented polyester film**

According to an embodiment, there is provided a process for preparing the oriented polyester film described above.

Specifically, the process for preparing an oriented polyester film according to an embodiment comprises polymerizing a diol component and a dicarboxylic acid component to prepare a polyester resin (S-1); preparing an oriented polyester sheet from the polyester resin (S-2); and heat-setting the oriented sheet (S-3), wherein when the film is subjected to a first heat treatment and a second heat treatment and is then analyzed by differential scanning calorimetry (DSC), a first melting temperature ($Tm_1$) and a second melting temperature ($Tm_2$) appear, and the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

In addition, the process for preparing an oriented polyester film according to an embodiment comprises polymerizing a diol component and a dicarboxylic acid component to prepare a polyester resin (S-1); preparing an oriented polyester sheet from the polyester resin (S-2); and heat-setting the oriented sheet (S-3), wherein when a sample of the oriented polyester film obtained by subjecting the oriented polyester film to a first heat treatment at 70°C, a preliminary heat treatment at 160°C, and then cutting it into 1 cm × 1 cm is mixed with a sample of polyethylene terephthalate (PET) obtained by passing a polyethylene terephthalate (PET) container through a 12.5-mm mesh sieve at a weight ratio of 3:97, which is heat-treated at 195°C for 90 minutes, and the heat-treated mixed sample is passed through the sieve to evaluate the crystallinity of the polyester oriented film, the crystalline fraction represented by the above Equation 2 is 30% or more.

Hereinafter, this will be described in detail.

Step (S-1): Preparation of a polyester resin

In step (S-1), a diol component and a dicarboxylic acid component are polymerized to prepare a polyester resin (a copolymer).

Since the diol component and the dicarboxylic acid component for the polymerization are the same as described above, a description thereon is omitted.

The polymerization of the diol component and the dicarboxylic acid component may be carried out by a conventionally known method (e.g., liquid phase polymerization, solid phase polymerization, or the like). A batch reactor or a continuous reactor may be used for the polymerization reaction. Specifically, the polymerization reaction may comprise an esterification reaction (transesterification reaction) of preparing an oligomer by reacting a diol component with a dicarboxylic acid component and a polycondensation reaction of the oligomer.

The temperature at which the esterification reaction is carried out is not particularly limited, but it may be 230 to 270°C, 235 to 268°C, 240 to 265°C, or 240 to 260°C, when the physical properties of a polyester resin and an oriented polyester film are taken into consideration. In addition, the period of time during which the esterification reaction is carried out is not particularly limited, but it may be 1 to 24 hours, 2 to 22 hours, 3 to 20 hours, or 4 to 18 hours. In addition, the pressure at which the esterification reaction is carried out is not particularly limited, but it may be 0 to 5.0 kgf/cm$^2$, 0.1 to 4.5 kgf/cm$^2$, 0.1 to 4.0 kgf/cm$^2$, or 0.1 to 3.0 kgf/cm$^2$.

The temperature at which the polycondensation reaction is carried out is not particularly limited, but it may be 245 to 290°C, 250 to 285°C, 255 to 280°C, or 255 to 270°C, when the physical properties of a polyester resin and an oriented polyester film are taken into consideration. In addition, the period of time during which the polycondensation reaction is carried out is not particularly limited, but it may be 1 to 24 hours, 2 to 24 hours, 5 to 22 hours, or 7 to 20 hours.

Meanwhile, an additive comprising at least one selected from the group consisting of a catalyst, a stabilizer, a colorant, a crystallizing agent, an antioxidant, and a branching agent may be employed in the polymerization reaction.

The catalyst is not particularly limited, but it may specifically be methylates of sodium and magnesium; acetates, borates, fatty acid salts, and carbonates of Zn, Cd, Mn, Co, Ca, and Ba; or oxides or hydrates of Mg, Pb, Mn, Ti, Zn, Sb, and Ge. For example, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, titanium dioxide, germanium dioxide, germanium tetrachloride, germanium ethyleneglycoxide, germanium acetate, or combinations thereof.

The stabilizer is not particularly limited, but a phosphorus-based compound such as phosphoric acid, trimethyl phosphate, and triethyl phosphate may be used.

The colorant is not particularly limited, but organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clariant, and Solvaperm Red BB toner of Clariant) may be used.

The crystallizing agent is not particularly limited, but a crystal nucleating agent, an ultraviolet absorber, a polyolefin resin, a polyamide resin, or the like may be used.

The antioxidant is not particularly limited, but hindered phenol-based compounds, phosphite-based compounds, thioether-based compounds, or the like may be used.

The branching agent is not particularly limited, but trimellitic anhydride, trimethylol propane, trimellitic acid, or the like may be used.

Step (S-2): Preparation of an oriented polyester sheet

In step (S-2), an oriented polyester sheet is prepared from the polyester resin obtained in step (S-1). The preparation of the oriented sheet may be carried out by a conventionally known method. Specifically, an oriented sheet may be prepared through a melting and casting step of a polyester resin, a uniaxial or biaxial stretching step, and/or a heat-setting step.

The melting and casting step of the polyester resin may be carried out through an extruder. In such an event, the melting temperature is not particularly limited, but it may be 180 to 310°C, 200 to 310°C, 230 to 310°C, 240 to 300°C, or 250 to 290°C. An unoriented sheet may be obtained through such a step, and the unoriented sheet thus obtained may be transferred to a stretching step. The unoriented sheet may be preheated to a predetermined temperature (e.g., 90 to 120°C) before going through the stretching step.

The uniaxial or biaxial stretching step may be carried out through a step of stretching the unoriented sheet obtained through the melting and casting step in the longitudinal direction (MD), the transverse direction (TD), or both directions. Stretching in the longitudinal direction may be carried out at a stretching ratio of 1 to 5 times or 1.1 to 4.5 times at 55 to 180°C or 60 to 170°C. In addition, stretching in the transverse direction may be carried out at a stretching ratio of 1.5 to 6 times or 2.5 to 5.5 times at 55 to 180°C or 60 to 170°C.

The oriented polyester film prepared through such a stretching step may have a heat shrinkage rate at 80°C in the main shrinkage direction of 40% or more, more specifically, 42% or more, 44% or more, 46% or more, 48% or more, 50% or more, 52% or more, 55% or more, or 60% or more. For example, the heat shrinkage rate at 80°C in the main shrinkage direction may be 40 to 70%, 41 to 65%, 42 to 60%, 43 to 60%, 44 to 58%, or 45 to 56%.

In addition, the oriented polyester film prepared through such a stretching step may have a heat shrinkage rate at 90°C in the main shrinkage direction of 50% or more, specifically, 51% or more, 52% or more, 54% or more, 56% or more, 60% or more, 63% or more, or 65% or more. For example, the heat shrinkage rate at 90°C in the main shrinkage direction may be 50 to 80%, 51 to 80%, 52 to 80%, 53 to 79%, 54 to 79%, or 55 to 78%.

Step (S-3): Heat setting

In step (S-3), the oriented sheet obtained in step (S-2) is heat set. The temperature at which the oriented sheet is heat set is not particularly limited, but it may be similar to, or higher than, the temperature of the stretching step. Specifically, the heat-setting temperature may be 60 to 200°C, 65 to 190°C, 65 to 180°C, or 65 to 170°C. As the heat-setting temperature is within the above range, an oriented polyester film having high crystallinity and high mechanical strength may be prepared.

Meanwhile, the oriented polyester film may be further subjected to heat treatment. The heat treatment may be carried out twice or more.

Step (S-4): First heat treatment

Step (S-4) is a step in which the oriented polyester film obtained in step (S-3) is first heat-treated.

The first heat treatment temperature is not particularly limited, but it may be 60 to 105°C, specifically, 62 to 104°C, 62 to 103°C, 65 to 102°C, 68 to 100°C, 70 to 100°C, 70 to 98°C, 70 to 97°C, or 70 to 96°C. For example, the first heat treatment may be carried out by immersing the oriented polyester film prepared in step (S-3) in hot water having the above temperature range for 1 minute or shorter, specifically, 50 seconds or shorter, 40 seconds or shorter, 30 seconds or shorter, 20 seconds or shorter, specifically, 5 seconds to 60 seconds, 5 seconds to 50 seconds, 5 seconds to 40 seconds, 5 seconds to 30 seconds, 5 seconds to 20 seconds, or 5 seconds to 15 seconds.

Step (S-5): Second heat treatment

Step (S-5) is a step in which the oriented polyester film first heat-treated in step (S-4) is second heat-treated. The second heat treatment temperature is not particularly limited, but it may be 140 to 220°C, specifically, 141 to 219°C, 142 to 218°C, 143 to 217°C, 144 to 216°C, 145 to 215°C, 145 to 214°C, 146 to 213°C, or 150 to 210°C. For example, the second heat treatment may be carried out by placing the oriented polyester film subjected to the first heat treatment in step (S-4) in an oven, applying the above temperature range, and storing it for 4 hours or shorter, specifically, 200 minutes or shorter, 180 minutes or shorter, 150 minutes or shorter, 120 minutes or shorter, 100 minutes or shorter, for example, 10 minutes to 200 minutes, 10 minutes to 180 minutes, 20 minutes to 150 minutes, 30 minutes to 120 minutes, 40 minutes to 120 minutes, 60 minutes to 120 minutes, 70 minutes to 100 minutes.

In addition, according to an embodiment, step (S-5) may further comprise a step in which the oriented polyester film first heat-treated in step (S-4) is preliminarily heat-treated before the second heat treatment.

Specifically, the second heat treatment may be carried out after the preliminary heat treatment of the oriented polyester film that has been subjected to the first heat treatment.

The preliminary heat treatment may be carried out in the same or similar temperature range as that of the second heat treatment. For example, the preliminary heat treatment may be carried out at a temperature of 140 to 220°C, specifically, 141 to 219°C, 142 to 218°C, 143 to 217°C, 144 to 216°C, 145 to 215°C, 145 to 214°C, 146 to 213°C, or 150 to 210°C, for 1 minute to 30 minutes, 1 minute to 20 minutes, 5 minutes to 30 minutes, 5 minutes to 25 minutes, 5 minutes to 20 minutes, 5 minutes to 15 minutes, 6 minutes to 25 minutes, 6 minutes to 20 minutes, 6 minutes to 15 minutes, or 6 minutes to 13 minutes.

For example, step (S-5) may comprise a step in which the oriented polyester film that has been subjected to the first heat treatment is preliminarily heat-treated at 140 to 220°C for 1 to 30 minutes, cooled to room temperature over 1 minute to 30 minutes, and the oriented polyester film that has been subjected to the preliminary heat treatment is second heat-treated at 140 to 220°C for 10 minutes to 200 minutes.

In addition, step (S-5) may comprise a step in which the oriented polyester film that has been subjected to the first heat treatment is preliminarily heat-treated at 150 to 210°C for 1 minute to 30 minutes, cooled to room temperature over 1 minute to 30 minutes, and the oriented polyester film that has been subjected to the preliminary heat treatment is second heat-treated at 150 to 210°C for 10 minutes to 180 minutes.

In the present invention, as the oriented polyester film obtained through the stretching step is heat-treated as described above, the crystallinity can be controlled to be high, along with an excellent heat shrinkage rate.

Specifically, the oriented polyester film may be shrunk through the first heat treatment, and the crystallinity of the oriented polyester film may be enhanced through the second heat treatment.

In addition, when the preliminary heat treatment is carried out after the first heat treatment and before the second heat treatment, the oriented polyester film shrunk by the first heat treatment is crystallized, and the crystallinity of the oriented polyester film can be maximized to an optimal range through the second heat treatment, whereby it is possible to further enhance recycling process efficiency.

If the heat treatment of the oriented polyester film is carried out only once (one time), the crystallinity of the film does not increase to the desired level. Thus, as in the present invention, the heat treatment of the oriented polyester film is preferably carried out first and second heat treatments (two times), or multiple times (two or more times) comprising first, preliminary, and second heat treatments.

Meanwhile, in the oriented polyester film prepared through the above steps according to the present invention, when the film is subjected to a first heat treatment and a second heat treatment and is then analyzed by differential scanning calorimetry (DSC), a first melting temperature ($Tm_1$) and a second melting temperature ($Tm_2$) appear. As the ratio ($H_2/H_1$) of the second heat of fusion ($H_2$) at the second melting temperature ($T_{m2}$) to the first heat of fusion ($H_1$) at the

first melting temperature ($T_{m1}$) satisfies the specific range, it is possible to achieve very high crystallinity, along with excellent heat shrinkability, heat resistance, and durability.

The heat treatment temperature and time of the first heat treatment and the second heat treatment are as described above.

In addition, the temperature and time of the preliminary heat treatment described below are also as described above.

According to another embodiment, when a differential scanning calorimetry (DSC) analysis is carried out after the first heat treatment, after the preliminary heat treatment before the second heat treatment, and after the second heat treatment, the first melting temperature ($T_{m1}$), the second-p melting temperature ($T_{m2-p}$), and the second melting temperature ($T_{m2}$) as described above appear, and the ratio ($H_2/H_1$) of the second heat of fusion ($H_2$) at the second melting temperature ($T_{m2}$) to the first heat of fusion ($H_1$) at the first melting temperature ($T_{m1}$) and/or the ratio ($H_2/H_{2-p}$) of the second heat of fusion ($H_2$) at the second melting temperature ($T_{m2}$) to the second-p heat of fusion ($H_{2-p}$) at the second-p melting temperature ($T_{m2-p}$) satisfy the specific ranges. As a result, crystallinity can be maximized. By virtue of such high crystallinity, in a recycling process of waste plastic containers after use, the recycling process of waste plastic containers without separating the oriented polyester film may be possible (for example, it is possible that waste plastic containers as the oriented polyester film is attached are put into the recycling process). As a result, the present invention can increase the efficiency of a recycling process as compared with the prior art.

**Article**

The present invention provides an article, which comprises an oriented polyester film.

According to an embodiment, there is provided an article, which comprises an oriented polyester film comprising a polyester resin, wherein the oriented polyester film comprises a polyester resin in which a diol component and a dicarboxylic acid component are polymerized, and wherein when the film is subjected to a first heat treatment and a second heat treatment and is then analyzed by differential scanning calorimetry (DSC), a first melting temperature ($Tm_1$) and a second melting temperature ($Tm_2$) appear, and the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

In addition, the article may comprise an oriented polyester film (polyester film), which is prepared by the first heat treatment and the second heat treatment; or the first heat treatment, the preliminary heat treatment, and the second heat treatment, as described above.

In addition, the article may be obtained by molding the polyester resin using a molding method such as extrusion and injection. It may be a film (or sheet) or a component used in the fields of automobiles, electricity, and electronics.

In addition, the article may comprise labels or cap seals for various containers such as plastic, or packaging supplies.

Hereinafter, the present invention will be described in more detail with reference to embodiments. However, these examples are provided only for illustration purposes, and the present invention is not limited thereto.

**Mode for the Invention**

**[Example 1]**

(1) Preparation of a polyester resin (copolymer)

A 10-liter reactor equipped with a column and a condenser that can be cooled by water was charged with terephthalic acid (TPA, 7,693.0 g), isosorbide (ISB, 96.7 g), ethylene glycol (EG, 2,601.3 g), 1,4-cyclohexanedimethanol (CHDM, 1,557.1 g), diethylene glycol (DEG, 1,213.7 g), a Ge catalyst (GeO$_2$, 1.0 g), a Ti catalyst (1.0 g), phosphoric acid (1.5 g), a blue toner (0.01 g), and a red toner (0.005 g). Next, after the temperature of the reactor was raised to 265°C, an esterification reaction (ES) was carried out at 265°C under a pressure of 2 kgf/cm$^2$ to obtain a transparent resulting material.

Subsequently, the resulting material was transferred to a polycondensation reactor, and a polycondensation reaction (PA) was then carried out at 270°C while the pressure of the polycondensation reactor was maintained at a lower pressure than normal pressure. When the intrinsic viscosity (IV) of the mixture in the polycondensation reactor reached 0.77 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented sheet was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 70°C for 10 seconds for the shrinkage thereof. Next, in order to enhance the crystallinity of the oriented polyester film, the polyester oriented film subjected to the first heat treatment was preliminarily heat-treated by storing it in an oven at 160°C for 10 minutes and cooled at room temperature for 30 minutes. The oriented polyester film subjected to the preliminary heat treatment was then stored in an oven at 160°C for 90 minutes to carry out a second heat treatment.

**[Example 2]**

(1) Preparation of a polyester resin (copolymer)

A 10-liter reactor equipped with a column and a condenser that can be cooled by water was charged with terephthalic acid (TPA, 7,663.2 g), ethylene glycol (EG, 3,345.5 g), 1,4-cyclohexanedimethanol (CHDM, 1,255.7 g), neopentyl glycol (NPG, 106.7 g), diethylene glycol (DEG, 978.7 g), a cyclohexanedimethanol derivative (CHDM derivative, 247.4 g), a Ti catalyst (1.0 g), a blue toner (0.01 g), and a red toner (0.01 g). Next, after the temperature of the reactor was raised to 255°C, an esterification reaction (ES) was carried out at 255°C under a pressure of 1 kgf/cm$^2$ to obtain a transparent resulting material.

Subsequently, the resulting material was transferred to a polycondensation reactor, and a polycondensation reaction (PA) was then carried out at 285°C while the pressure of the polycondensation reactor was maintained at a lower pressure than normal pressure. When the intrinsic viscosity (IV) of the mixture in the polycondensation reactor reached 0.65 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented sheet was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 90°C for 10 seconds for the shrinkage thereof. Next, in order to enhance the crystallinity of the oriented polyester film, the polyester oriented film subjected to the first heat treatment was preliminarily heat-treated by storing it in an oven at 175°C for 10 minutes and cooled at room temperature for 30 minutes. The oriented polyester film subjected to the preliminary heat treatment was then stored in an oven at 175°C for 90 minutes to carry out a second heat treatment.

**[Example 3]**

(1) Preparation of a polyester resin (copolymer)

A 10-liter reactor equipped with a column and a condenser that can be cooled by water was charged with recycled bis(2-hydroxyethyl) terephthalate (r-BHET, 1,202.9 g), terephthalic acid (TPA, 7,075.2 g), ethylene glycol (EG, 3,488.9 g), 1,4-cyclohexanedimethanol (CHDM, 1,363.9 g), diethylene glycol (DEG, 1,063.0 g), a Ti catalyst (1.0 g), a blue toner (0.02 g), and a red toner (0.01 g). Next, after the temperature of the reactor was raised to 255°C, an esterification reaction (ES) was carried out at 255°C under a pressure of 0.5 kgf/cm$^2$ to obtain a transparent resulting material.

Subsequently, the resulting material was transferred to a polycondensation reactor, and a polycondensation reaction (PA) was then carried out at 285°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented sheet was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 95°C for 10 seconds for the shrinkage thereof. Next, in order to enhance the crystallinity of the oriented polyester film, the polyester oriented film subjected to the first heat treatment was preliminarily heat-treated by storing it in an oven at 155°C for 10 minutes and cooled at room temperature for 30 minutes. The oriented polyester film subjected to the preliminary heat treatment was then stored in an oven at 155°C for 90 minutes to carry out a second heat treatment.

**[Example 4]**

(1) Preparation of a polyester resin (copolymer)

A 10-liter reactor equipped with a column and a condenser that can be cooled by water was charged with terephthalic acid (TPA, 7,918.3 g), ethylene glycol (EG, 4,080.5 g), 1,4-cyclohexanedimethanol (CHDM, 1,068.5 g), diethylene glycol (DEG, 832.8 g), a Ge catalyst (GeO$_2$, 1.0 g), a blue toner (0.05 g), and a red toner (0.02 g). Next, after the temperature of the reactor was raised to 260°C, an esterification reaction (ES) was carried out at 260°C under a pressure of 1 kgf/cm$^2$ to obtain a transparent resulting material.

Subsequently, the resulting material was transferred to a polycondensation reactor, and a polycondensation reaction (PA) was then carried out at 275°C while the pressure of the polycondensation reactor was maintained at a lower pressure than normal pressure. When the intrinsic viscosity (IV) of the mixture in the polycondensation reactor reached 0.78 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 95°C for 10 seconds for the shrinkage thereof. Next, in order to enhance the crystallinity of the oriented polyester film, the polyester oriented film subjected to the first heat treatment was preliminarily heat-treated by storing it in an oven at 165°C for 10 minutes and cooled at room temperature for 30 minutes. The oriented polyester film subjected to the preliminary heat treatment was then stored in an oven at 165°C for 90 minutes to carry out a second heat treatment.

**[Example 5]**

(1) Preparation of a polyester resin (copolymer)

A 10-liter reactor equipped with a column and a condenser that can be cooled by water was charged with terephthalic acid (TPA, 7,878.5 g), isosorbide (ISB, 494.9 g), ethylene glycol (EG, 4,076.7 g), 1,4-cyclohexanedimethanol (CHDM, 1,139.1 g), diethylene glycol (DEG, 887.8 g), an Mn catalyst (Mn (II) acetate tetrahydrate, 1.5 g), an Sb catalyst ($Sb_2O_3$, 1.8 g), and cobalt acetate (0.8 g). Next, after the temperature of the reactor was raised to 240°C, an esterification reaction (ES) was carried out at 240°C under a pressure of 0.1 kgf/$cm^2$ to obtain a transparent resulting material.

Subsequently, the resulting material was transferred to a polycondensation reactor, and a polycondensation reaction (PA) was then carried out at 255°C while the pressure of the polycondensation reactor was maintained at a lower pressure than normal pressure. When the intrinsic viscosity (IV) of the mixture in the polycondensation reactor reached 0.85 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 95°C for 10 seconds for the shrinkage thereof. Next, in order to enhance the crystallinity of the oriented polyester film, the polyester oriented film subjected to the first heat treatment was preliminarily heat-treated by storing it in an oven at 175°C for 10 minutes and cooled at room temperature for 30 minutes. The oriented polyester film subjected to the preliminary heat treatment was then stored in an oven at 175°C for 90 minutes to carry out a second heat treatment.

**[Example 6]**

(1) Preparation of a polyester resin (copolymer)

A 10-liter reactor equipped with a column and a condenser that can be cooled by water was charged with terephthalic acid (TPA, 8,279.3 g), ethylene glycol (EG, 4,432.3 g), neopentyl glycol (NPG, 864.5 g), a Ge catalyst ($GeO_2$, 1.0 g), cobalt acetate (0.4 g), a blue toner (0.03 g), and a red toner (0.01 g). Next, after the temperature of the reactor was raised to 250°C, an esterification reaction (ES) was carried out at 250°C under a pressure of 1 kgf/$cm^2$ to obtain a transparent resulting material.

Subsequently, the resulting material was transferred to a polycondensation reactor, and a polycondensation reaction (PA) was then carried out at 285°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 95°C for 10 seconds for the shrinkage thereof. Next, in order to enhance the crystallinity of the oriented polyester film, the polyester oriented film subjected to the first heat treatment was preliminarily heat-treated by storing it in an oven at 160°C for 10 minutes and cooled at room temperature for 30 minutes. The oriented polyester film subjected to the preliminary heat treatment was then stored in an oven at 160°C for 90 minutes to carry out a second heat treatment.

**[Example 7]**

(1) Preparation of a polyester resin (copolymer)

A 10-liter reactor equipped with a column and a condenser that can be cooled by water was charged with recycled bis(2-hydroxyethyl) terephthalate (r-BHET, 2,288.5 g), terephthalic acid (TPA, 5,982.5 g), ethylene glycol (EG, 739.3 g), 1,4-cyclohexanedimethanol (CHDM, 1,441.6 g), neopentyl glycol (NPG, 1,301.4 g), diethylene glycol (DEG, 1,123.6 g), a Ge catalyst ($GeO_2$, 1.0 g), a blue toner (0.03 g), and a red toner (0.01 g). Next, after the temperature of the reactor was raised to 265°C, an esterification reaction (ES) was carried out at 265°C under a pressure of 2 kgf/cm$^2$ to obtain a transparent resulting material.

Subsequently, the resulting material was transferred to a polycondensation reactor, and a polycondensation reaction (PA) was then carried out at 270°C while the pressure of the polycondensation reactor was maintained at a lower pressure than normal pressure. When the intrinsic viscosity (IV) of the mixture in the polycondensation reactor reached 0.78 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 100°C for 10 seconds for the shrinkage thereof. Next, in order to enhance the crystallinity of the oriented polyester film, the polyester oriented film subjected to the first heat treatment was preliminarily heat-treated by storing it in an oven at 210°C for 10 minutes and cooled at room temperature for 30 minutes. The oriented polyester film subjected to the preliminary heat treatment was then stored in an oven at 210°C for 90 minutes to carry out a second heat treatment.

**[Example 8]**

(1) Preparation of a polyester resin (copolymer)

A 10-liter reactor equipped with a column and a condenser that can be cooled by water was charged with recycled bis(2-hydroxyethyl) terephthalate (r-BHET, 2,509.9 g), terephthalic acid (TPA, 6,561.3 g), ethylene glycol (EG, 3,281.5 g), 1,4-cyclohexanedimethanol (CHDM, 790.5 g), diethylene glycol (DEG, 616.1 g), a Ti catalyst (1.0 g), a blue toner (0.01 g), and a red toner (0.01 g). Next, after the temperature of the reactor was raised to 263°C, an esterification reaction (ES) was carried out at 263°C under a pressure of 1 kgf/cm$^2$ to obtain a transparent resulting material.

Subsequently, the resulting material was transferred to a polycondensation reactor, and a polycondensation reaction (PA) was then carried out at 275°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 80°C for 10 seconds for the shrinkage thereof. Next, in order to enhance the crystallinity of the oriented polyester film, the polyester oriented film subjected to the first heat treatment was preliminarily heat-treated by storing it in an oven at 170°C for 10 minutes and cooled at room temperature for 30 minutes. The oriented polyester film subjected to the preliminary heat treatment was then stored in an oven at 170°C for 90 minutes to carry out a second heat treatment.

[Comparative Example 1]

(1) Preparation of a polyester resin (copolymer)

A 10-liter reactor equipped with a column and a condenser that can be cooled by water was charged with recycled bis(2-hydroxyethyl) terephthalate (r-BHET, 2,256.8 g), terephthalic acid (TPA, 5,899.6 g), ethylene glycol (EG, 824.5 g), 1,4-cyclohexanedimethanol (CHDM, 2,487.8 g), diethylene glycol (DEG, 1,939.0 g), a Ge catalyst (GeO$_2$, 1.0 g), a blue toner (0.01 g), and a red toner (0.01 g). Next, after the temperature of the reactor was raised to 273°C, an esterification reaction (ES) was carried out at 273°C under a pressure of 0.5 kgf/cm$^2$ to obtain a transparent resulting material.

Subsequently, the resulting material was transferred to a polycondensation reactor, and a polycondensation reaction (PA) was then carried out at 285°C while the pressure of the polycondensation reactor was maintained at a lower pressure than normal pressure. When the intrinsic viscosity (IV) of the mixture in the polycondensation reactor reached 0.80 dl/g, the mixture was then discharged to the outside of the polycondensation reactor to form strands, which were solidified with a cooling liquid and then granulated to have an average weight of about 12 to 14 mg to prepare polyester resin (copolymer) chips.

(2) Preparation of an oriented polyester sheet

The polyester resin chips were fed to an extruder, melt-extruded at a temperature of 180 to 310°C, and cast at a temperature of 20 to 70°C to prepare an unoriented polyester sheet. Subsequently, the unoriented film was heated to 75 to 90°C and oriented 5 times in the transverse direction (TD) to prepare an oriented polyester sheet.

(3) Heat setting

The oriented polyester sheet was heat set at 60 to 220°C to prepare an oriented polyester film having a thickness of 50 μm.

Thereafter, the oriented polyester film was subjected to a first heat treatment as it was immersed in hot water at 110°C for 10 seconds. Next, the oriented polyester film subjected to the first heat treatment was stored in an oven at 225°C for 30 minutes to carry out a second heat treatment.

[Test Example 1]

The oriented polyester films subjected to first heat treatment, preliminary heat treatment, and second heat treatment in Examples 1 to 8 and Comparative Example 1 were each analyzed by differential scanning caalorimetry (DSC) to determine whether a melting temperature ($T_m$) appeared. The results are shown in Table 1 below and Fig. 1 (Example 6). The DSC analysis of the oriented polyester film was carried out as follows.

DSC analysis device: DSC 1 model of Mettler Toledo was used.

Sample preparation: About 6-10 mg of an oriented polyester film, subjected to first and second, or first, preliminary, and second, heat treatments, was taken and filled into an aluminum pan.

Scan conditions: It was heated from room temperature to 280°C at a rate of 10°C/minute, followed by annealing at 280°C for 3 minutes to obtain a DSC curve.

Confirmation of melting temperature: The temperature at which an endothermic peak appeared during the temperature elevation procedure in the obtained DSC curve was defined as the melting temperature.

As can be seen from Fig. 1, the oriented polyester film in Example 6 shows different results after the first heat treatment, preliminary heat treatment, and second heat treatment.

Specifically, the sum of heats of fusion of the oriented polyester film in Example 6 after the first heat treatment, preliminary heat treatment, and second heat treatment was increased. In particular, after the second heat treatment, a plurality of melting temperatures increased as compared with before the heat treatment appeared. As a result, it is noted that crystallization initiates due to the preliminary heat treatment, and crystallinity can be further enhanced after the second heat treatment.

**[Test Example 2]**

The heat shrinkage rate of each of the oriented polyester films subjected to the first heat treatment in Examples 1 to 8 and Comparative Example 1 was evaluated as follows. The results are shown in Table 1 below.

Sample preparation: The oriented polyester films were each cut into a size of 5 cm × 5 cm and stored at room temperature (25°C).

Heat shrinkage at 80°C: The oriented polyester film sample was immersed in hot water at 80°C for 10 seconds, and the change in length in the transverse direction (TD), which is the main shrinkage direction, was calculated by the following Equation 1-1.

Heat shrinkage at 90°C: The oriented polyester film sample was immersed in hot water at 90°C for 10 seconds, and the change in length in the transverse direction (TD), which is the main shrinkage direction, was calculated by the following Equation 1-2.

$$[\text{Equation 1-1}]$$

$$\text{Heat shrinkage rate (TS}_{80}, \%) = \frac{L_{25} - L_{80}}{L_{25}} \times 100$$

In Equation 1-1, $L_{25}$ is the initial length of the oriented polyester film sample in the transverse direction (TD) at 25°C, and $L_{80}$ is the length of the oriented polyester film sample in the transverse direction (TD) after immersion in hot water at 80°C for 10 seconds.

$$[\text{Equation 1-2}]$$

$$\text{Heat shrinkage rate (TS}_{90}, \%) = \frac{L_{25} - L_{90}}{L_{25}} \times 100$$

In Equation 1-2, $L_{25}$ is the initial length of the oriented polyester film sample in the transverse direction (TD) at 25°C, and $L_{90}$ is the length of the oriented polyester film sample in the transverse direction (TD) after immersion in hot water at 90°C for 10 seconds.

**[Test Example 3]**

The oriented polyester films after the preliminary heat treatment and before the second heat treatment in Examples 1 to 8 and Comparative Example 1 were each evaluated for recyclability (crystalline fraction) as follows. The results are shown in Table 1 below.

Sample preparation: The oriented polyester films after the preliminary heat treatment and before the second heat treatment in Examples 1 to 8 and Comparative Example 1 were each cut to 1 cm × 1 cm to prepare an oriented polyester film sample (flake).

In addition, a polyethylene terephthalate (PET) container was crushed in a crusher and passed through a 12.5-mm mesh sieve to prepare a PET sample (flakes) of the above size in which the polyethylene terephthalate (PET) was crushed.

The oriented polyester film sample (flakes) and the PET sample (flakes) were mixed, and the mixed sample was heat-treated at 195°C for 90 minutes.

Thereafter, the mixed sample (mixed flakes) heat-treated was passed through a 12.5-mm mesh sieve to obtain an agglomerated sample remaining on the sieve. This was defined as an oriented polyester film sample fused with the PET sample after heat treatment.

In addition, the mixed sample (mixed flakes) heat-treated was passed through a 12.5-mm mesh sieve to obtain a sample passing through the sieve. This was defined as an oriented polyester film sample separated from the PET sample after heat treatment.

The weight of each sample was measured to calculate the crystalline fraction (%) represented by the following Equation 2.

[Equation 2]

$$\text{Crystalline fraction (\%)} = (F_T/F_m) \times 100$$

In Equation 2, $F_T$ is the ratio $((S_s/M_T) \times 100, \%)$ of the weight $(S_s)$ of the sample that has passed through the 12.5-mm mesh sieve among the heat-treated mixed sample to the total weight $(M_T)$ of the heat-treated mixed sample, and $F_m$ is the ratio $((C_s/M_T) \times 100, \%)$ of the weight $(C_s)$ of the agglomerated sample that remains on the 12.5-mm mesh sieve among the heat-treated mixed sample to the total weight $(M_T)$ of the heat-treated mixed sample.

[Table 1]

| | | Ex. | | | | | | | | C. Ex. |
|---|---|---|---|---|---|---|---|---|---|---|
| | | 1 | 2 | 3 | 4 | 5 | 6 | 7 | 8 | 1 |
| Heat of fusion (H) | After first heat treatment ($H_1$) (J/g) | 4.80 | 2.50 | 7.98 | 10.20 | 8.70 | 27.70 | 18.80 | 42 | 4.7 |
| | After preliminary heat treatment ($H_{2\text{-}p}$) (J/g) | 4.72 | 5.65 | 9.50 | 9.20 | 10.40 | 32.15 | 23.32 | 41.5 | 0 |
| | After second heat treatment ($H_1$) (J/g) | 1.65 | 8.53 | 13.78 | 18.22 | 24.96 | 29.80 | 7.11 | 50 | 0 |
| Ratio of heats of fusion | $H_2/_{H1}$ | 0.34 | 3.41 | 1.73 | 1.79 | 2.87 | 1.08 | 0.38 | 1.19 | 0.00 |
| | $H_2/H_{2\text{-}p}$ | 0.35 | 1.51 | 1.45 | 1.98 | 2.40 | 0.93 | 0.31 | 1.20 | 0.00 |
| Heat shrinkage rate | 80°C (%) | 52 | 48 | 55 | 45 | 44 | 46 | 45 | 25 | 65 |
| | 90°C (%) | 67 | 59 | 68 | 57 | 55 | 55 | 55 | 35 | 70 |
| Recyclability | Fm (%) | 26.1 | 16.8 | 17.5 | 31.3 | 12.6 | 9.7 | 7.0 | 5.5 | 45 |
| | FT (%) | 13.6 | 11.8 | 11.7 | 14.8 | 12.0 | 9.7 | 7.0 | 5.5 | 12 |
| | Crystalline fraction (%) $(F_T/F_m) \times 100$ | 52 | 70 | 67 | 47 | 95 | 100 | 100 | 100 | 27 |

Referring to Table 1, in the oriented polyester films of Examples 1 to 8 in the present invention, which had two or more melting temperatures ($T_{m1}$, $T_{m2\text{-}p}$, $T_{m2}$), along with the ratio ($H_2/H_1$) of the second heat of fusion ($H_2$) at the second melting temperature ($T_{m2}$) to the first heat of fusion ($H_1$) at the first melting temperature ($T_{m1}$) and/or the ratio ($H_2/H_{2\text{-}p}$) of the second heat of fusion ($H_2$) at the second melting temperature ($T_{m2}$) to the second-p heat of fusion ($H_{2\text{-}p}$) at the second-p melting temperature ($T_{m2\text{-}p}$) satisfying the specific ranges, the heat shrinkage rates with respect to temperature were high, and the crystalline fraction was enhanced to ensure recyclability.

In contrast, in the oriented polyester film of Comparative Example 1 having one melting temperature, the crystalline fraction was significantly lowered to 27%.

Meanwhile, in the oriented polyester film of Example 8, in which a low amount of a comonomer (e.g., diethylene glycol) was employed, the heat shrinkage rate was slightly reduced.

Therefore, the oriented polyester film according to the present invention can be advantageously used as a heat-shrinkable film for packaging and/or labels for plastic containers.

Further, the oriented polyester film according to the present invention has a high crystallinity. In a recycling process of waste plastic containers after use, the recycling process of waste plastic containers without separating the oriented polyester film may be possible (for example, it is possible that waste plastic containers as the oriented polyester film is attached are put into the recycling process). Thus, the recycling process efficiency can be increased as compared with the prior art.

**Claims**

1. An oriented polyester film, which comprises a polyester resin in which a diol component and a dicarboxylic acid component are polymerized,

   wherein when the film is subjected to a first heat treatment and a second heat treatment and is then analyzed by differential scanning calorimetry (DSC), a first melting temperature ($Tm_1$) and a second melting temperature ($Tm_2$) appear, and
   the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

2. The oriented polyester film of claim 1, wherein when the oriented polyester film after the first heat treatment and after a preliminary heat treatment before the second heat treatment is analyzed by differential scanning calorimetry (DSC), a second-p melting temperature ($T_{m2-p}$) appears, and
   the ratio ($H_2/H_{2-p}$) of the second heat of fusion ($H_2$) at the second melting temperature ($T_{m2}$) to the second-p heat of fusion ($H_{2-p}$) at the second-p melting temperature ($T_{m2-p}$) is 0.1 or more.

3. The oriented polyester film of claim 1, wherein, after the first heat treatment, one or more first melting temperatures ($T_{m1}$) appear, and the total sum of heats of fusion ($H_{1T}$) is 1.0 J/g or more.

4. The oriented polyester film of claim 1, wherein, after the second heat treatment, one or more second melting temperatures ($T_{m2}$) appear, and the total sum of heats of fusion ($H_{2T}$) is 1.0 J/g or more.

5. The oriented polyester film of claim 1, wherein the ratio ($H_{1T}/H_{2T}$) of the total sum of heats of fusion ($H_{1T}$) after the first heat treatment to the total sum of heats of fusion ($H_{2T}$) after the second heat treatment is 0.1 or more.

6. The oriented polyester film of claim 1, wherein, after the second heat treatment, the second melting temperature ($T_{m2}$) is 150°C to 230°C, and it has crystallinity.

7. An oriented polyester film, which comprises a polyester resin in which a diol component and a dicarboxylic acid component are polymerized,

   wherein when a sample of the oriented polyester film obtained by subjecting the oriented polyester film to a first heat treatment at 70°C, a preliminary heat treatment at 160°C, and then cutting it into 1 cm $\times$ 1 cm is mixed with a sample of polyethylene terephthalate (PET) obtained by passing a polyethylene terephthalate (PET) container through a 12.5-mm mesh sieve at a weight ratio of 3:97, which is heat-treated at 195°C for 90 minutes, and the heat-treated mixed sample is passed through the sieve to evaluate the crystallinity of the polyester oriented film, the crystalline fraction represented by the following Equation 2 is 30% or more:

$$[\text{Equation 2}]$$

$$\text{Crystalline fraction (\%)} = (F_T/F_m) \times 100$$

   in Equation 2, $F_T$ is the ratio (($S_s/M_T$) $\times$ 100, %) of the weight ($S_s$) of the sample that has passed through the 12.5-mm mesh sieve among the heat-treated mixed sample to the total weight ($M_T$) of the heat-treated mixed sample, and $F_m$ is the ratio (($C_s/M_T$) $\times$ 100, %) of the weight ($C_s$) of the agglomerated sample that remains on the 12.5-mm mesh sieve among the heat-treated mixed sample to the total weight ($M_T$) of the heat-treated mixed sample.

8. The oriented polyester film of claim 1 or 7, which has a heat shrinkage rate of 40% or more as represented by the following Equation 1-1:

$$[\text{Equation 1-1}]$$

$$\text{Heat shrinkage rate (TS}_{80}, \%) = \frac{L_{25} - L_{80}}{L_{25}} \times 100$$

   in Equation 1-1, $L_{25}$ is the initial length of the oriented polyester film sample in the transverse direction (TD) at 25°C,

and $L_{80}$ is the length of the oriented polyester film sample in the transverse direction (TD) after immersion in hot water at 80°C for 10 seconds.

9. The oriented polyester film of claim 1 or 7, wherein the glycol component comprises at least one selected from the group consisting of bis(2-hydroxyethyl) terephthalate, isosorbide, neopentyl glycol, ethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, recycled cyclohexanedimethanol, recycled ethylene glycol, recycled bis(2-hydroxyethyl) terephthalate, and recycled diethylene glycol.

10. The oriented polyester film of claim 1 or 7, wherein the dicarboxylic acid component comprises at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, azelaic acid, recycled isophthalic acid, recycled terephthalic acid, recycled dimethyl isophthalate, and recycled dimethyl phthalate.

11. The oriented polyester film of claim 1 or 7, wherein the polyester resin has an intrinsic viscosity (IV) of 0.5 dl/g to 1.2 dl/g.

12. A process for preparing an oriented polyester film, which comprises:

   polymerizing a diol component and a dicarboxylic acid component to prepare a polyester resin;
   preparing an oriented polyester sheet from the polyester resin; and
   heat-setting the oriented sheet,
   wherein when the film is subjected to a first heat treatment and a second heat treatment and is then analyzed by differential scanning calorimetry (DSC), a first melting temperature ($Tm_1$) and a second melting temperature ($Tm_2$) appear, and
   the ratio ($H_2/H_1$) of the second heat of fusion ($H_2$) at the second melting temperature ($Tm_2$) to the first heat of fusion ($H_1$) at the first melting temperature ($Tm_1$) is 0.1 or more.

13. The process for preparing an oriented polyester film of claim 12, wherein the first heat treatment is carried out at 60 to 105°C for 1 minute or shorter.

14. The process for preparing an oriented polyester film of claim 12, wherein the second heat treatment temperature is carried out at 140 to 220°C for 4 hours or shorter.

15. The process for preparing an oriented polyester film of claim 12, wherein the second heat treatment is carried out after a preliminary heat treatment of the oriented polyester film, which has been subjected to the first heat treatment, at 140 to 220°C for 1 minute to 30 minutes.

**Fig. 1**

## INTERNATIONAL SEARCH REPORT

| | International application No. |
| --- | --- |
| | **PCT/KR2024/007248** |

### A. CLASSIFICATION OF SUBJECT MATTER

**C08J 5/18**(2006.01)i; **B29C 55/02**(2006.01)i

According to International Patent Classification (IPC) or to both national classification and IPC

### B. FIELDS SEARCHED

Minimum documentation searched (classification system followed by classification symbols)

C08J 5/18(2006.01); B29C 48/00(2019.01); B29C 48/08(2019.01); C08J 5/04(2006.01); C08J 5/24(2006.01); C09J 133/04(2006.01); C09J 7/02(2006.01); D01D 5/253(2006.01); D01F 6/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 열처리(heat treatment), 용융온도(melting temperature)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2021-0052313 A (SKC CO., LTD. et al.) 10 May 2021 (2021-05-10)<br>See claims 1-9; and paragraph [0001]. | 1-15 |
| A | KR 10-2012-0082153 A (TORAY ADVANCED MATERIALS KOREA INC.) 23 July 2012 (2012-07-23)<br>See claims 1-6. | 1-15 |
| A | KR 10-2011-0109533 A (WOONGJIN CHEMICAL CO., LTD.) 06 October 2011 (2011-10-06)<br>See claims 1-16. | 1-15 |
| A | KR 10-2021-0008511 A (SABIC GLOBAL TECHNOLOGIES B.V.) 22 January 2021 (2021-01-22)<br>See claims 1-15. | 1-15 |
| A | US 2015-0175756 A1 (TOYOBO CO., LTD.) 25 June 2015 (2015-06-25)<br>See claims 1-4. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 September 2024** | **04 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007248**

| Patent document cited in search report | | | Publication date (day/month/year) | Patent family member(s) | | | Publication date (day/month/year) |
|---|---|---|---|---|---|---|---|
| KR | 10-2021-0052313 | A | 10 May 2021 | AU | 2020-372604 | A1 | 27 May 2021 |
| | | | | AU | 2020-375502 | A1 | 10 June 2021 |
| | | | | BR | 112021008460 | A2 | 17 August 2021 |
| | | | | BR | 112021008460 | B1 | 25 January 2022 |
| | | | | BR | 112021010601 | A2 | 24 May 2022 |
| | | | | BR | 21008460 | A2 | 17 August 2021 |
| | | | | CA | 3119761 | A1 | 06 May 2021 |
| | | | | CA | 3119761 | C | 26 September 2023 |
| | | | | CN | 113068403 | A | 02 July 2021 |
| | | | | CN | 113068403 | B | 19 September 2023 |
| | | | | CN | 113166528 | A | 23 July 2021 |
| | | | | EP | 3854839 | A1 | 28 July 2021 |
| | | | | EP | 3854839 | A4 | 16 March 2022 |
| | | | | EP | 3868813 | A1 | 25 August 2021 |
| | | | | EP | 3868813 | A4 | 16 February 2022 |
| | | | | JP | 2022-510105 | A | 26 January 2022 |
| | | | | JP | 2022-510146 | A | 26 January 2022 |
| | | | | KR | 10-2021-0052211 | A | 10 May 2021 |
| | | | | KR | 10-2021-0052212 | A | 10 May 2021 |
| | | | | KR | 10-2258534 | B1 | 31 May 2021 |
| | | | | KR | 10-2258535 | B1 | 31 May 2021 |
| | | | | KR | 10-2263118 | B1 | 10 June 2021 |
| | | | | MX | 2021004813 | A | 30 November 2021 |
| | | | | MX | 2021006215 | A | 21 January 2022 |
| | | | | MX | 2021013903 | A | 05 May 2022 |
| | | | | MY | 196227 | A | 24 March 2023 |
| | | | | US | 11396577 | B2 | 26 July 2022 |
| | | | | US | 12037449 | B2 | 16 July 2024 |
| | | | | US | 2022-0002477 | A1 | 06 January 2022 |
| | | | | US | 2022-0098377 | A1 | 31 March 2022 |
| KR | 10-2012-0082153 | A | 23 July 2012 | KR | 10-1242418 | B1 | 11 March 2013 |
| KR | 10-2011-0109533 | A | 06 October 2011 | KR | 10-1124559 | B1 | 16 March 2012 |
| KR | 10-2021-0008511 | A | 22 January 2021 | CN | 112135866 | A | 25 December 2020 |
| | | | | EP | 3790925 | A1 | 17 March 2021 |
| | | | | EP | 3790925 | B1 | 03 January 2024 |
| | | | | JP | 2021-523275 | A | 02 September 2021 |
| | | | | JP | 7514188 | B2 | 10 July 2024 |
| | | | | US | 2021-0054155 | A1 | 25 February 2021 |
| | | | | WO | 2019-217680 | A1 | 14 November 2019 |
| US | 2015-0175756 | A1 | 25 June 2015 | CN | 104508021 | A | 08 April 2015 |
| | | | | CN | 104508021 | B | 09 June 2017 |
| | | | | EP | 2862892 | A1 | 22 April 2015 |
| | | | | EP | 2862892 | A4 | 06 April 2016 |
| | | | | EP | 2862892 | B1 | 09 September 2020 |
| | | | | JP | 2016-021120 | A | 21 July 2016 |
| | | | | JP | 6303500 | B2 | 04 April 2018 |
| | | | | KR | 10-2015-0040856 | A | 15 April 2015 |
| | | | | KR | 10-2058768 | B1 | 23 December 2019 |
| | | | | MY | 173061 | A | 23 December 2019 |
| | | | | TW | 201410757 | A | 16 March 2014 |

Form PCT/ISA/210 (patent family annex) (July 2022)

## INTERNATIONAL SEARCH REPORT
### Information on patent family members

| International application No. |
| --- |
| **PCT/KR2024/007248** |

| Patent document cited in search report | Publication date (day/month/year) | Patent family member(s) | | Publication date (day/month/year) |
| --- | --- | --- | --- | --- |
| | | TW | I599599 B | 21 September 2017 |
| | | US | 9296867 B2 | 29 March 2016 |
| | | WO | 2014-021120 A1 | 06 February 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090062882